# EUROPEAN PATENT APPLICATION

(11) **EP 4 325 963 A1**
(43) Date of publication of application: **21.02.2024**
(21) Application number: 21937048.3
(22) Date of filing: 27.12.2021
(51) Int. Cl.: H04W 72/04, H04W 28/04, H04W 84/12

(54) **COMMUNICATION DEVICE AND COMMUNICATION METHOD**

(30) Priority: 12.04.2021 JP 2021067409
(71) Applicant: Sony Group Corporation, Tokyo 108-0075 (JP)
(72) Inventor: HIRATA, Ryuichi, Tokyo 108-0075 (JP); TANAKA, Ken, Tokyo 108-0075 (JP); SUGAYA, Shigeru, Tokyo 108-0075 (JP)
(74) Representative: D Young & Co LLP
(86) International application number: PCT/JP2021/048660
(87) International publication number: WO 2022/219855

(57) **Abstract**

Provided is a communication device that performs wireless communication using a plurality of links such that a difference between transmission end times of respective links is within a predetermined range.

A communication device includes a first communication unit that performs communication on a first link, a second communication unit that performs communication on a second link, and a control unit that controls communication operations of the first communication unit and the second communication unit using the first link and the second link. The control unit controls a transmission frame length in the first link or the second link when the first communication unit starts transmission first on the first link.

## Description

### TECHNICAL FIELD

The technology disclosed in this description (hereinafter, "the present disclosure") relates to a communication device and a communication method that perform wireless communication using a plurality of links.

### BACKGROUND ART

Wireless communication using a plurality of links (Multi-link Operation: MLO) has been studied as a method for coping with the requirement of high transmission speed such as 8-K high resolution image data like or XR (collectively referring to VR, AR, MR, and SR). The "link" mentioned herein is a wireless transmission path through which data can be transmitted between two communication devices. When MLO is performed, individual links are selected from, for example, a plurality of mutually independent, wireless transmission paths divided into frequency domains. Specifically, channels selected from a plurality of channels included in any band of frequency bands such as 2.4-GHz band, 5 G-Hz band, 6-GHz band, and 920-MHz band are used.

A communication device that supports MLO is referred to as a multi-link device (MLD). An MLD is a logical entity including one or more communication terminals (Station: STA), and has only one service access point (SAP) to an upper layer. The MLD in which each included STA is an access point (AP) is referred to as AP MLD. Furthermore, the MLD that is a non-access point STA, that is, a non-AP STA, is referred to as non-AP MLD.

While an MLD performs transmission using a plurality of links, due to factors such as a degree of proximity of frequencies between links, a transmitted signal on a certain link may be leaked, and interference with a received signal on another link is intense, deteriorating communication quality. As described above, a pair of links in which a restriction occurs when transmission and reception are performed simultaneously between links, is referred to as a non-simultaneous transmit and receive (NSTR) link pair. On the other hand, a pair of links with no restriction when signals are simultaneously transmitted and received between links, such as a case where leakage power between links does not affect communication quality, is referred to as a simultaneous transmit and receive (STR) link pair. In the present description, when an AP MLD and a non-AP MLD are communicating with each other using a certain link pair, in a case where the link pair is an STR link pair for the AP MLD but is an NSTR link pair for the non-AP MLD, the AP MLD is defined as an STR AP MLD, and the non-AP MLD is defined as a non-STR non-AP MLD.

For example, when an AP MLD transmits a downlink (DL) physical layer convergence protocol (PLCP) protocol data unit (PPDU) to a NSTR non-AP MLD over a plurality of links, then the NSTR non-AP MLD tries to reply with an ACK on a link on which transmission has been terminated earlier, there is a possibility that the transmitted signal is leaked, interferes with a received signal on another link on which transmission has not been terminated, resulting in deterioration of communication quality.

For this reason, in Non-Patent Document 1, when an AP MLD transmits a DL PPDU to a NSTR non-AP MLD over a plurality of links, in a case where the DL PPDU is a PPDU that requests an immediate response from the NSTR non-AP MLD after short Inter frame space (SIFS) from the end of transmission, it is determined to transmit the DL PPDU such that a difference between the transmission end times of the DL PPDUs in individual links is within a predetermined range in order to prevent, in the NSTR non-AP MLD, simultaneous occurrence of reception of the DL PPDU and transmission of the immediate response after the SIFS in which the DL PPDU reception is completed.

### CITATION LIST

### NON-PATENT DOCUMENT

Non-Patent Document 1: Edward Au,et al.,"Specification Framework for TGbe,"IEEE 802.11-19/1262r23,Jan.17,2021
Non-Patent Document 2: Robert Stacy,et al.,"Proposed TGax draft specification,"IEEE 802.11-16/0024r1,March.2,2016

### SUMMARY OF THE INVENTION

### PROBLEMS TO BE SOLVED BY THE INVENTION

An object of the present disclosure is to provide a communication device and a communication method that perform wireless communication using a plurality of links such that a difference between the transmission end times of individual links is within a predetermined range.

### SOLUTIONS TO PROBLEMS

The present disclosure has been made in view of the problems described above, and a first aspect thereof is a communication device including:
a first communication unit that performs communication on a first link;
a second communication unit that performs communication on a second link; and
a control unit that controls communication operations of the first communication unit and the second communication unit using the first link and the second link, in which
the control unit controls a transmission frame length in the first link or the second link when the first communication unit starts transmission first on the first link.

The control unit controls the transmission frame length in the first link or the second link on a basis of information associated with transmission data that has been started to be transmitted by the first communication unit and information associated with transmission data scheduled to be transmitted by the second communication unit. The information associated with the transmission data includes at least an OFDM symbol length, a number of OFDM symbols, and a transmission start time (including a scheduled transmission start time).

In a case where a difference between a transmission end time in the first link by the first communication unit and a scheduled transmission end time in the second link by the second communication unit is more than or equal to a predetermined value, the control unit controls the transmission frame length such that the difference between the transmission end time and the scheduled transmission end time is less than a predetermined value.

Furthermore, a second aspect of the present disclosure is a communication method in which a communication device performs communication using a first link and a second link, the communication method including:
a step of starting transmission first on the first link; and
a step of controlling a transmission frame length in the first link or the second link such that a difference between a transmission end time in the first link and a scheduled transmission end time in the second link is less than a predetermined value.

### EFFECTS OF THE INVENTION

According to the present disclosure, it is possible to provide a communication device and a communication method that aligns the transmission end times of individual links by adjusting a length of a transmission frame in a specific link when performing wireless communication using a plurality of links.

Note that, effects described in the present description are merely examples, and the effects brought about by the present disclosure are not limited thereto. Furthermore, the present disclosure may further provide additional effects in addition to the effects described above.

Still other objects, features, and advantages of the present disclosure will become apparent from a more detailed description based on embodiments as described later and the accompanying drawings.

### BRIEF DESCRIPTION OF DRAWINGS

Fig. 1 is a diagram illustrating a configuration example of a communication system.
Fig. 2 is a diagram illustrating a functional configuration example of a communication device 200.
Fig. 3 is a flowchart illustrating a processing procedure for performing an MLO such that transmission end times in a plurality of links are aligned.
Fig. 4 is a diagram illustrating a configuration example of a frame including capability information.
Fig. 5 is a diagram illustrating a communication sequence in which an AP MLD adjusts a PPDU length in a specific link in order to align the transmission end times between links.
Fig. 6 is a diagram illustrating another communication sequence in which the AP MLD adjusts the PPDU length in a specific link in order to align the transmission end times between links.
Fig. 7 is a diagram illustrating OFDM symbols used in a PPDU format before IEEE 802.11ax and OFDM symbols used in a PPDU format after IEEE 802.11ax.

### MODE FOR CARRYING OUT THE INVENTION

Hereinafter, the present disclosure will be described in the following order with reference to the drawings.

A. System configuration
B. Device configuration of communication device
C. Transmission operation
D. Communication sequence example
E. Effects

### A. System configuration

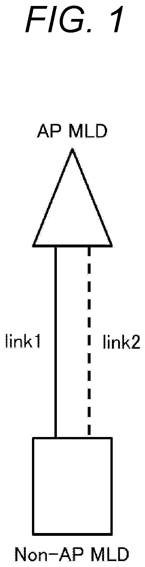

Fig. 1 schematically illustrates a configuration example of a communication system to which the present disclosure is applied. The illustrated communication system includes an AP MLD and a non-AP MLD, and performs an MLO. The AP MLD is a communication device corresponding to a base station that supports the MLO. Furthermore, the Non-AP MLD is a communication device corresponding to a terminal that supports the MLO. The Non-AP MLD is connected to the AP MLD by a plurality of links. In Fig. 1, a solid line and a broken line drawn between the AP MLD and the Non-AP MLD respectively indicate different links (link 1 and link 2) that wirelessly connect the AP MLD and the Non-AP MLD.

The link used in the communication system shown in Fig. 1 is a wireless transmission path through which data can be transmitted between two communication devices, and each link is selected from, for example, a plurality of mutually independent wireless transmission paths (channels) divided into frequency domains. One link may be two channels selected from the same frequency band or two channels selected from different frequency bands. Furthermore, the number of links used between the AP MLD and the Non-AP MLD is not limited to two, and three or more links may be used for communication.

In the present embodiment, it is also assumed that data frames in formats having different orthogonal frequency division multiplexing (OFDM) symbol lengths are transmitted link by link. For example, it is assumed that a non-high-efficiency PPDU (hereinafter, also referred to as "non-HE PPDU") based on a format before IEEE 802.11 ax is transmitted on one link, and an HE/EHT PPDU (HE PPDU or extreme high throughput (EHT) PPDU, hereinafter referred to as "HE/EHT PPDU") on the basis of a format after IEEE 802.11ax is transmitted on the other link (see Non-Patent Document 2).

### B. Device configuration of communication device

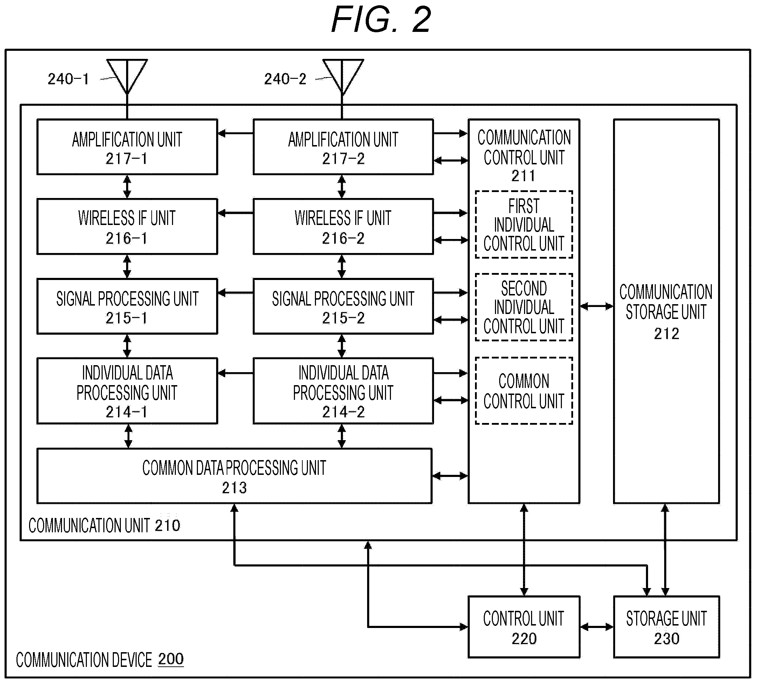

Fig. 2 illustrates an internal configuration example of the communication device 200. The communication device 200 is a communication device that supports an MLO, and is assumed to operate as an AP MLD or a Non-AP MLD in the communication system shown in Fig. 1. The communication device 200 mainly includes a communication unit 210, a control unit 220, a storage unit 230, and an antenna 240. Furthermore, the communication unit 210 includes a communication control unit 211, a communication storage unit 212, a data processing unit including a common data processing unit 213 and an individual data processing unit 214, a signal processing unit 215, a wireless interface (IF) unit 216, and an amplification unit 217.

The individual data processing unit 214, the signal processing unit 215, the wireless interface (IF) unit 216, the amplification unit 217, and the antenna 240 are provided for each link. It is assumed that the communication device 200 performs an MLO using two links of a first link and a second link. For example, an individual data processing unit 214-1, a signal processing unit 215-1, a wireless interface unit 216-1, an amplification unit 217-1, and an antenna 240-1 are used as an individual communication set for transmission and reception processing in the first link, and an individual data processing unit 214-2, a signal processing unit 215-2, a wireless interface unit 216-2, an amplification unit 217-2, and an antenna 240-2 are used as another individual communication set for transmission and reception processing in the second link. For example, one of the individual communication sets transmits and receives a non-HE PPDU on the basis of a format before IEEE 802.11ax on the first link, and the other individual communication set transmits and receives an HE/EHT PPDU on the basis of a format after IEEE 802.11ax on the second link.

The communication control unit 211 controls operation of each unit in the communication unit 210 and information transmission between the units. Furthermore, the communication control unit 211 performs a control to transfer control information and management information to be notified to other communication devices to the data processing unit (common data processing unit 213, individual data processing unit 214-1, and individual data processing unit 214-2).

In the present disclosure, the communication control unit 211 includes a first individual control unit and a second individual control unit that control each individual communication set, and a common control unit that performs a control common to a common data processing unit and each individual communication set. Each individual control unit transmits control information (such as the OFDM symbol length) related to a transmission data unit to other individual control units. At this time, the information may be transmitted via the common control unit.

The communication storage unit 212 holds information used by the communication control unit 211. Furthermore, the communication storage unit 212 holds data transmitted by the communication device 200 and data received by the communication device 200.

During transmission, the common data processing unit 213 performs sequence management of the data held in the communication storage unit 212 and the control information and the management information received from the communication control unit 211, performs encryption processing or the like to generate a data unit, and performs allocation to the individual data processing units 214-1 and 214-2. Furthermore, during reception, the common data processing unit 213 performs decryption processing and reorder processing of the data unit.

During transmission, the individual data processing units 214-1 and 214-2 perform a channel access operation based on carrier sensing in a corresponding link, an addition of a media access control (MAC) header and an addition of an error detection code to data to be transmitted, and multiple concatenation processing of the data unit, respectively. Furthermore, during reception, the individual data processing units 214-1 and 214-2 perform decoupling processing of an MAC header, analysis and error detection of the data unit received in the corresponding link, as well as a retransmission request operation, respectively.

Note that operations of the common data processing unit 213 and the individual data processing units 214-1 and 214-2 are not limited to the above, and for example, the common data processing unit 213 may also perform operations of the individual data processing units 214-1 and 214-2, one of the individual data processing units 214-1 and 214-2 may perform at least a part of the operation of the common data processing unit 213, and one of the individual data processing units 214-1 and 214-2 may perform other operations.

During transmission, the signal processing units 215-1 and 215-1-2 perform encoding, interleaving, modulation, and the like on the data unit, and add a physical header, and generate a symbol stream. Furthermore, during reception, the signal processing units 215-1 and 215-2 analyze the physical header, perform demodulation, deinterleaving, decoding, and the like on the symbol stream, and generate a data unit. Furthermore, the signal processing units 215-1 and 215-2 perform complex channel characteristic estimation and spatial separation processing as necessary.

During transmission, the wireless interface units 216-1 and 216-2 perform digital-analog signal conversion, filtering, up-conversion, and phase control on the symbol stream, and generate a transmitted signal. Furthermore, during reception, the wireless interface units 216-1 and 216-2 perform down-conversion, filtering, and analog-digital signal conversion on a received signal, and generate a symbol stream.

The amplification units 217-1 and 217-2 amplify signals input from the wireless interface units 216-1 and 216-2 during transmission. Furthermore, the amplification units 217-1 and 217-2 amplify signals input from the antennas 240-1 and 240-2 during reception. The amplification units 217-1 and 217-2 may partially be a component outside the communication unit 210. Furthermore, the amplification units 217-1 and 217-2 may partially be included in the wireless interface units 216-1 and 216-2.

The control unit 220 controls the communication unit 210 and the communication control unit 211. Furthermore, the control unit 220 may perform some of the operations of the communication control unit 211 instead. Furthermore, the communication control unit 211 and the control unit 220 may be configured as one block.

The storage unit 230 holds information used by the communication unit 210 and the control unit 220. Furthermore, the storage unit 230 may perform some of the operations of the communication storage unit 212 instead. Furthermore, the storage unit 230 and the communication storage unit 212 may be configured as one block.

With the individual data processing unit 214-1, the signal processing unit 215-1, the wireless interface unit 216-1, the amplification unit 217-1, and the antenna 240-1 being used as one individual communication set, the wireless communication is performed on the first link. Furthermore, with the individual data processing unit 214-2, the signal processing unit 215-2, the wireless interface unit 216-2, the amplification unit 217-2, and the antenna 240-2 being used as another individual communication set, the wireless communication is performed on the second link. Although only two individual communication sets are depicted in Fig. 2, three or more individual communication sets may be components of the communication device 200, and each individual communication set may be configured to perform wireless communication on a respective link. Furthermore, the storage unit 230 or the communication storage unit 212 may be included in each individual communication set.

The link is a wireless transmission path through which data can be transmitted between two communication devices, and each link is selected from, for example, the plurality of wireless transmission paths (channels) divided in the frequency domain and independent from each other. The link used by each of the individual communication sets described above may be two channels selected from the same frequency band or two channels selected from different frequency bands. Furthermore, the individual data processing unit 214 and the signal processing unit 215 may be used as one set, and two or more sets may be configured to be connected to one common wireless interface unit 216.

The wireless interface unit 216, the amplification unit 217, and the antenna 240 may be used as one set, and two or more sets may be components of the communication device 200.

The communication unit 210 may also be configured by one or more large scale integrations (LSIs).

The common data processing unit 213 is also referred to as an upper MAC or a higher MAC, and the individual data processing unit 214 is also referred to as a lower MAC. Furthermore, a set of the individual data processing unit 214 and the signal processing unit 215 is also referred to as an AP entity or a non-AP entity. Furthermore, the communication control unit 211 is also referred to as an MLD management entity.

Furthermore, in the present description, functional blocks (or an individual communication set) from the antenna 240 to the individual data processing unit 214 and the individual control unit are collectively referred to as an STA.

In the present embodiment, it is also assumed that the communication device 200 transmits a data frame in a format having a different OFDM symbol length for each link. For example, a non-HE PPDU based on a format before IEEE 802.11 ax is transmitted on the first link, and an HE/EHT PPDU based on a format after IEEE 802.11 ax is transmitted on the second link.

### C. Transmission operation

For example, when an AP MLD transmits a DL physical layer protocol data unit (PPDU) to a NSTR non-AP MLD over a plurality of links, if the NSTR non-AP MLD tries to reply with an ACK (immediate response) on a link on which transmission has been terminated earlier, there is a possibility that the transmitted signal is leaked, interferes with a received signal on another link on which transmission has not been terminated, resulting in deterioration of communication quality.

For this reason, in Non-Patent Document 1, when an AP MLD transmits a DL PPDU to a NSTR non-AP MLD over a plurality of links, in a case where the DL PPDU is a PPDU that requests an immediate response from the NSTR non-AP MLD after short inter frame space (SIFS) from the end of transmission, in order to prevent reception of the DL PPDU and transmission of the immediate response after the SIFS in which the DL PPDU reception is completed from occurring at the same time in the NSTR non-AP MLD, it is determined to transmit the DL PPDU such that a difference in the transmission end time of the DL PPDU is within 8 microseconds (however, in a case where a frame requesting return of the PPDU to a transmission destination includes a frame requesting carrier sensing before transmission of the PPDU to the transmission destination (specifically, in a case where the DL PPDU is a trigger frame, and a CS Required subfield in the trigger frame is set to 1, and carrier sensing is required before transmission of the PPDU induced by the trigger), within 4 microseconds).

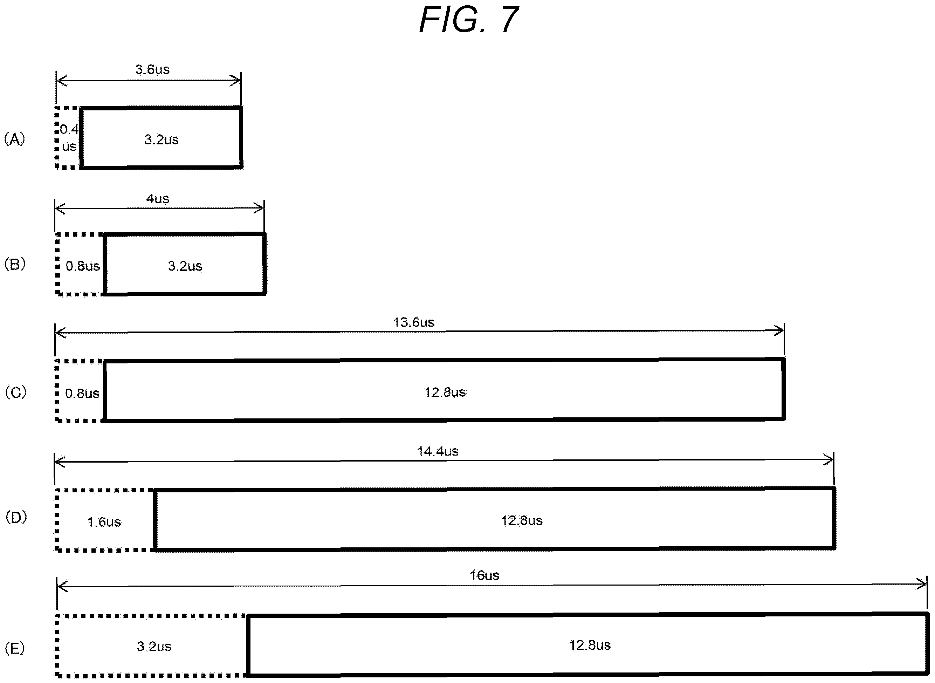

However, the OFDM symbol length is different between the PPDU transmitted in a format before IEEE 802.11 ax and the PPDU transmitted in a format after IEEE 802.11 ax. Fig. 7 illustrates OFDM symbols used in a PPDU format before IEEE 802.11 ax and OFDM symbols used in a PPDU format after IEEE 802.11 ax. Specifically, in the non-HE PPDU, a guard interval (GI) of 0.4 microseconds or 0.8 microseconds is inserted into the number of OFDM symbols of 3.2 microseconds, and a length per symbol is either 3.6 microseconds or 4.0 microseconds (see Figs. 7(A) and 7(B)). On the other hand, in a data portion of the HE/EHT PPDU, a GI of 0.8 microseconds, 1.6 microseconds, or 3.2 microseconds is inserted into an OFDM symbol of 12.8 microseconds, and a total length per symbol is one of 13.6 microseconds, 14.4 microseconds, and 16.0 microseconds (see Figs. 7(C) to 7(E)). For this reason, when the non-HE PPDU based on a format before IEEE 802.11ax is transmitted on one link and the HE/EHT PPDU based on a format after IEEE 802.11ax is simultaneously transmitted on the other link, and the transmission end time are aligned, a difference in the number of symbols may cause a deviation of 8 microseconds (or 4 microseconds) or more. For example, even when the number of MPDUs to be aggregated is adjusted or padding is performed in the non-HE PPDU based on a format before IEEE 802.11ax, it is assumed that the transmission end time becomes shorter by 8 microseconds (or 4 microseconds) or more than the transmission end time of the HE/EHT PPDU based on a format after IEEE 802.11ax.

Therefore, in the present disclosure, for example, in the communication system that performs the MLO shown in Fig. 1, when the AP MLD transmits PPDUs having different OFDM symbol lengths to the non-AP MLD, information associated with the transmission start time and the number of OFDM symbols of the PPDU transmitted first is shared between links such that transmission end time between links are aligned. Therefore, according to the present disclosure, the AP MLD can adjust the length of the PPDU in the other link on the basis of the information shared between the links such that the transmission is terminated at the same time as the PPDU that has been started to be transmitted first. As a result, in a case where the non-AP MLD of the transmission destination is an NSTR, it is possible to prevent deterioration in communication quality due to interference between a transmitted signal to be returned on a link on which transmission has been terminated earlier and a received signal on another link on which transmission has not been terminated yet.

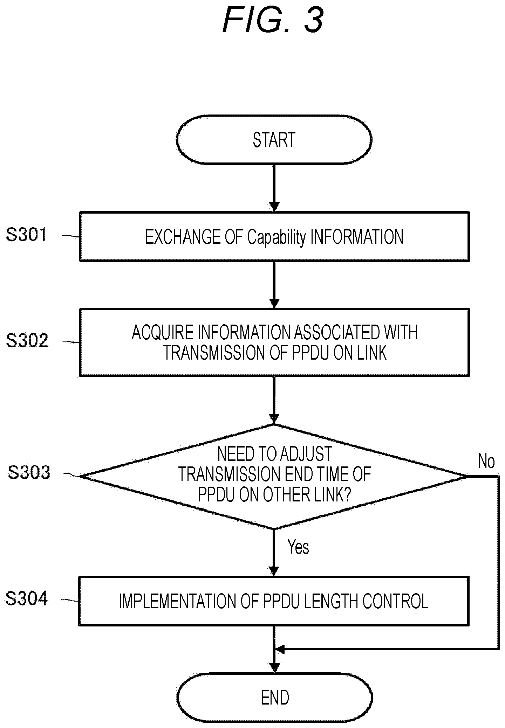

Fig. 3 illustrates a processing procedure for the communication device 200 (for example, the AP MLD) to perform the MLO such that the transmission end time in a plurality of links is aligned in a form of a flowchart.

First, the capability information is exchanged between MLDs (step S301).

Then, when an STA in the MLD obtains a transmission right and starts to transmit the PPDU, information associated with the length of the PPDU is exchanged between the STAs in the MLD (step S302).

Next, it is determined whether or not to control the transmission end time of the PPDU of another STA using the information associated with the transmitted PPDU and the information associated with the PPDU scheduled to be transmitted (step S303).

Then, when it is determined in a preceding step S303 that the transmission end time of the PPDU of another STA is to be controlled (Yes in step S303), the PPDU length of another STA is controlled (step S304).

### Step S301: Exchange of capability information

The capability information exchanged in step S301 includes the following information.

(1) Whether or not it is possible to change the length of the PPDU during transmission and to notify in the PPDU that the length has been changed.
(2) When the information associated with the change of the length of the PPDU is notified in the PPDU being received, whether or not a demodulation and decoding operation can be completed within a specified time based on the information.
(3) Whether or not transmission and reception can be performed simultaneously in a pair of links (whether it is an STR or a NSTR).
(3) Number of available links
(4) Number of available radios

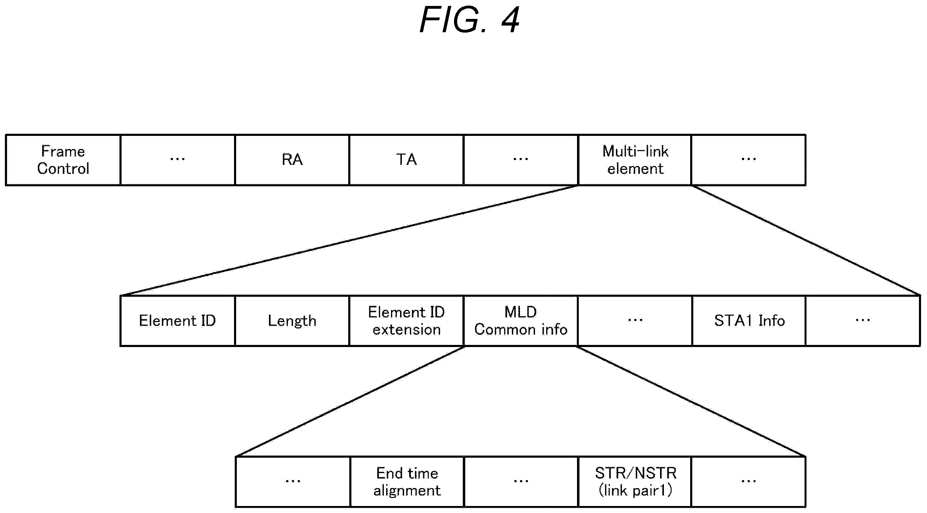

Examples of a place where the capability information as described above is described may include the following. Furthermore, a configuration example of a frame including the capability information is shown in Fig. 4.

(1) In an MLD common info field that stores information associated with the MLD in a multi-link element.
(2) In an STAn info field that stores information for each STA in the multi-link element.

Furthermore, examples of a timing in which the capability information is exchanged may include the following.

(1) When a connection between MLDs is established.
(2) During transmission and reception of beacons.
(3) During data transmission.

### Step S302: Exchange of information associated with length of PPDU

In step S302, when an STA in the MLD obtains a transmission right and starts to transmit the PPDU, information associated with the length of the PPDU is exchanged between STAs in the MLD. Examples of information associated with the length of the PPDU exchanged between STAs in the MLD may include the following.

(1) Number of OFDM symbols
(2) OFDM symbol length (guard interval length)
(3) Transmission start time (which may be scheduled transmission start time)
(4) Length of padding

The length of padding is, for example, the following length.
(4-1) Length of a paddig field in the trigger frame
(4-2) Length of a post-EOF A-MPDU (MAC protocol data unit) padding
(4-3) Length of a packet extension field
(5)MCS(Modulation and Coding Scheme)
(6) Number of MPDUs being aggregated
(7) Transmission bandwidth
(8) Number of transmission streams
(9) Coding method
(10) PPDU format
(11) Whether or not a frame requesting return of the PPDU to the transmission destination includes a frame requesting carrier sensing before transmission of the PPDU to the transmission destination

Specifically, it is one of the following.
(11-1) Whether or not the trigger frame with CS required subfield = 1 is included
(11-2) Whether or not it is a request to send (RTS)
(12) Transmission power
(13) Presence or absence of signal extension
(14) How many long training fields (LTFs) are included
(15) Whether or not a frame with high priority (a high priority frame) is included

### Step S303: Implementation determination of transmission end time control

In step S303, it is determined whether or not to control the transmission end time of the PPDU of another STA using the information associated with the transmitted PPDU and the information associated with the PPDU scheduled to be transmitted.

Examples of the information associated with the PPDU scheduled to be transmitted used for determining implementation of a PPDU transmission end time control may include the following.

(1) Number of OFDM symbols
(2) OFDM symbol length (guard interval length)
(3) Transmission start time (which may be scheduled transmission start time)
(4) Length of padding

The length of padding is, for example, the following length.
(4-1) Length of a paddig field in the trigger frame
(4-2) Length of a Post-EOF A-MPDU padding
(4-3) Length of a packet extension field
(5)MCS(Modulation and Coding Scheme)
(6) Number of MPDUs being aggregated
(7) Transmission bandwidth
(8) Number of transmission streams
(9) Coding method
(10) PPDU format
(11) Whether or not a frame requesting return of the PPDU to the transmission destination includes a frame requesting carrier sensing before transmission of the PPDU to the transmission destination

Specifically, it is one of the following.
(11-1) Whether or not the trigger frame with CS required subfield = 1 is included
(11-2) Whether or not it is a request to send (RTS)
(12) Transmission power
(13) Presence or absence of signal extension
(14) How many LTFs are included
(15) Whether or not a frame with high priority (a high priority frame) is included
(16) Number of frames in a buffer of each access category
(17) Number of times of retransmission

An implementation determination of the PPDU transmission end time control is performed on the basis of at least one of the capability information acquired in step S301, the information associated with the transmitted PPDU and the information associated with the PPDU scheduled to be transmitted acquired in step S302.

As a premise that the AP MLD controls the PPDU transmission end time, the AP MLD itself needs to have capability to change the length of the PPDU and notify that the length in the PPDU has been changed. Furthermore, when information associated with a change in the length of the PPDU is notified in the PPDU being received, the non-AP MLD serving as the transmission destination needs to have capability to terminate the demodulation and decoding operation within a specified time on the basis of the information.

Furthermore, a fact that a pair of links on which the MLO is performed is the NSTR link pair for the non-AP MLD as a transmission destination may also be a premise for controlling the PPDU transmission end time. This is because, in a case of an STR link pair for the non-AP MLD, even when the transmission end time of link 1 and link 2 do not match, the communication quality does not deteriorate due to interference between links, and thus it is not necessary to share information between the links or adjust the transmission start time.

Then, basically, the transmission end time of the transmitted PPDU is calculated based on the information associated with the transmitted PPDU, and the scheduled transmission end time of the PPDU scheduled to be transmitted is calculated on the basis of the information associated with the PPDU scheduled to be transmitted; furthermore, a difference between the two end time is calculated, and in a case where the difference is more than or equal to a predetermined time difference, it is determined that a length control of the PPDU is performed. In a case where a frame requesting return of the PPDU to the transmission destination includes a frame requesting carrier sensing before transmission of the PPDU to the transmission destination, the predetermined time difference is set to 4 microseconds, and in other cases, the predetermined time difference is set to 8 microseconds.

Here, the type of the transmitted PPDU and the frame included in the transmitted PPDU may be determined to determine whether the length control of the PPDU is performed. For example, in a case where a frame with high priority is included in the transmitted PPDU whose transmission has been terminated earlier, it may be determined that the length control of the PPDU is not performed. This is to prevent the transmission end time of the frame with high priority from being delayed due to adjustment of the PPDU length by unnecessary padding or the like.

Furthermore, in a case where it is determined that the length control of the PPDU is performed, it is also determined which of the PPDU lengths of the PPDU that has been started to be transmitted first and the PPDU scheduled to be transmitted is subjected to the length control based on the capability information, the information associated with the transmitted PPDU, and the information associated with the PPDU scheduled to be transmitted. In a case where a destination terminal of the transmitted PPDU supports reception processing when the length of the PPDU is changed during reception, it may be determined that the length of the PPDU transmitted first is controlled.

### Step S304: Length control of PPDU

In a case where it is determined to control the transmission end time in step S303, the length control of the PPDU is performed.

In a case where the length control of the PPDU is implemented, examples of a place for describing such information that controls information indicating that the length of the PPDU is changed to be described in the PPDU may include the following.

(1) In an aggregated control (A-Control) field
(2)Frame body

Methods for controlling a transmission timing of the PPDU are roughly divided into control for increasing the length of one PPDU so as to be aligned with the transmission end time of the PPDU of another STA and control for decreasing the length of one PPDU so as to be aligned with the transmission end time of the PPDU of another STA.

Examples of the control for increasing or decreasing the length of the PPDU so as to be aligned with the transmission end time of the PPDU of another STA may include the following.

(1) Set the OFDM symbol length of the PPDU transmitted by one STA to a length that is an integral multiple of the OFDM symbol length of the PPDU transmitted by the other STA.
(2) Adjust the number of OFDM symbols.
(3) Adjust the length of padding.

In the above, in a case where the length of padding is adjusted, the length of padding field, the length of the post-EOF A-MPDU padding, or the length of a packet extention field in the trigger frame is adjusted.

Furthermore, the control for decreasing the length of the PPDU so as to be aligned with the transmission end time of the PPDU of another STA is performed by stopping transmission of the PPDU.

### D. Communication sequence example

In a case where two MLDs communicate using two links, the following two ways of PPDU transmission orders are assumed.

(1) In a case where the PPDU to be transmitted first is an HE/EHT PPDU
(2) In a case where the PPDU to be transmitted first is a non-HE PPDU

Furthermore, the following two ways are assumed as targets for performing the transmission end time control of the PPDU.

(1) Control the PPDU length of the PPDU to be transmitted first.
(2) Control the PPDU length of the PPDU to be transmitted next.

Hereinafter, two ways of communication sequence examples in which the PPDU to be transmitted first is an HE/EHT PPDU will be described.

Communication sequence example 1: the PPDU to be transmitted first is an HE/EHT PPDU, and the PPDU length of the HE/EHT PPDU transmitted first is controlled

Communication sequence example 2: the PPDU to be transmitted first is an HE/EHT PPDU, and the PPDU length of the non-HE/EHT PPDU transmitted later is controlled

Note that although the description is omitted for the communication sequence example in which the PPDU to be transmitted first is a non-HE PPDU, it should be understood that the operation is similar to that of the communication sequence example to be described below except that the information to be exchanged and the control implementation determination result are different.

Furthermore, MLDs may communicate with each other using three or more links. For example, to start with, an EHT PPDU (PPDU 1) is transmitted, subsequently a non-HE PPDU (PPDU 2) with a PPDU length adjusted to match the transmission end time of the EHT PPDU is transmitted, and then a new EHT PPDU (PPDU 3) may be transmitted by adjusting the PPDU length such that the transmission end time thereof is aligned with those of the PPDU 1 and PPDU 2.

### D-1. Communication sequence example 1

This term D-1 describes a communication sequence example in which the PPDU to be transmitted first is an HE/EHT PPDU and the PPDU length of the HE/EHT PPDU transmitted first is controlled.

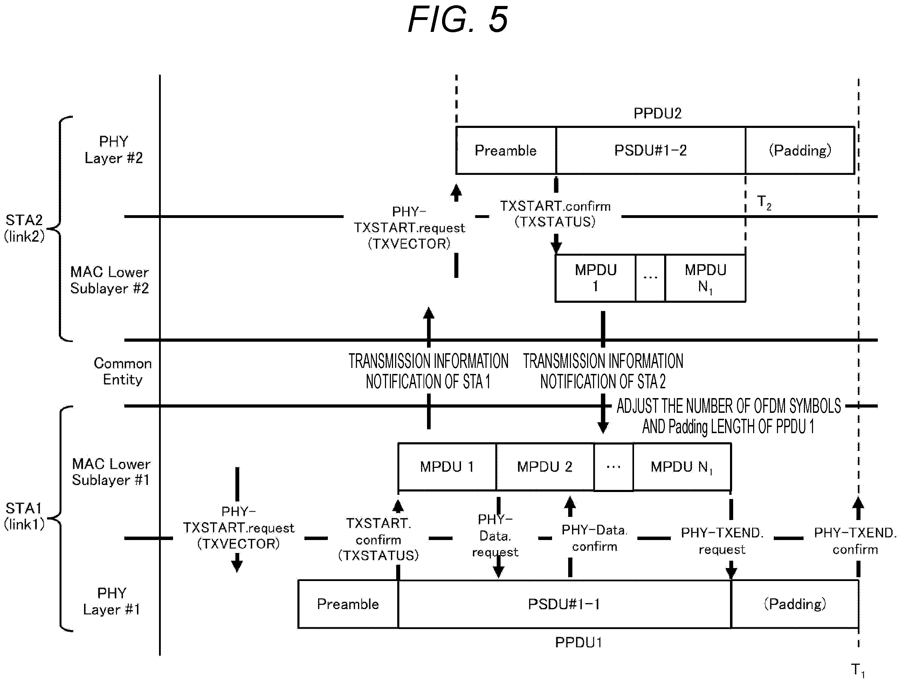

As a specific example, Fig. 5 illustrates a communication sequence example in a case where the STR AP MLD including STA 1 and STA 2 transmits the DL PPDU to the NSTR non-AP MLD. However, the link used by STA 1 is link 1, and the link used by STA 2 is link 2. Furthermore, it is assumed that the PPDU to be transmitted first by STA 1 is an EHT/HE PPDU (PPDU 1), and the PPDU to be transmitted later by STA 2 is a non-HE PPDU (PPDU 2). Note that, it is assumed that each PPDU does not include a frame with high priority.

Before the start of the communication sequence shown in Fig. 5, for example, the AP MLD and the non-AP MLD exchange capability information indicating that a pair of link 1 and link 2 is an STR link pair for the AP MLD and the NSTR link pair for the non-AP MLD during connection. Moreover, the capability information indicating whether or not it is possible to perform an adjustment control of the PPDU length and decoding of the PPDU with a length adjusted is exchanged. Note that in a case where the pair of link 1 and link 2 is not the NSTR link pair for the non-AP MLD (that is, is the STR link pair), the communication quality does not deteriorate due to the interference between links even when the transmission end time of link 1 and the transmission end time of link 2 do not match, and thus it is not necessary to share information between the links or adjust the transmission start time.

Then, in the communication sequence shown in Fig. 5, first, a primitive of PHY-TXSTART.request (TXVECTOR) is sent from an MAC lower sublayer #1 to a PHY sublayer #1 of STA 1, and a start of transmission of a physical layer service data unit (PSDU) is requested. At this time, TIME_OF_DEPARTURE_REQUESTED = true in PHY-TXSTART.request is set, and information associated with the transmission start time is set to be described in PHY-TXSTART.confirm (TXSTATUS) sent from the PHY sublayer #1.

The PHY sublayer #1 of STA 1 notifies the MAC lower sublayer #1 of information associated with the transmission start time in PHY-TXSTART.confirm (TXSTATUS). Here, the information associated with the start of transmission is TIME_OF_DEPARTURE, TIME_OF_DEPARTURE_ClockRate, and TX_START_OF_FRAME_OFFSET. TIME_OF_DEPARTURE is a value described in units of 1/TIME_OF_DEPARTURE_ClockRate in a range of 0 to 2³²-1, and indicates a time at which energy of the frame is delivered from the antenna. TIME_OF_DEPARTURE_ClockRate is a value in a range of 0 to 2¹⁶-1 described in MHz. TX_START_OF_FRAME_OFFSET is a value in a range of 0 to 2³²-1 described in units of 10 nanoseconds, and is an estimated value of a time when the preamble starts to be transmitted from the antenna and a time until this primitive is sent to the MAC lower sublayer #1. Therefore, the MAC lower sublayer #1 of STA 1 can accurately get the time when the PHY sublayer #1 started to transmit a frame.

Next, the MAC lower sublayer #1 of STA 1 notifies a MAC lower sublayer #2 of STA 2 of information associated with the PPDU (PPDU 1) transmitted by STA 1 through the common entity. The information associated with the PPDU 1 is the number of OFDM symbols of the PPDU 1, a length of the OFDM symbol per symbol, a length of a packet extension (PE) field, a transmission start time, and information indicating whether or not the trigger frame with CS required = 1 is included in the PPDU 1. Therefore, the MAC lower sublayer #2 of STA 2 can calculate the transmission end time (T₁) of the PPDU 1.

When STA 2 obtains the transmission right with link 2, the MAC lower sublayer #2 of STA 2 sends a primitive of PHY-TXSTART.request (TXVECTOR) to the PHY sublayer #2, and requests transmission of the PPDU (PPDU 2). At this time, similarly to STA 1, TIME_OF_DEPARTURE_REQUESTED = true in PHY-TXSTART.request is set, and information associated with the transmission start time is set to be described in PHY-TXSTART.confirm (TXSTATUS) sent from the PHY sublayer #2. Therefore, the MAC lower sublayer #2 of STA 2 can accurately know the transmission start time (T₂) of the PPDU 2.

After receiving PHY-TXSTART.confirm (TXSTATUS) from the PHY sublayer #2, the MAC lower sublayer #2 of STA 2 notifies the MAC lower sublayer #1 of STA 1 of information associated with transmission of the PPDU 2 through the common entity. The information associated with transmission of the PPDU 2 is the number of OFDM symbols of the PPDU 2, a length of the OFDM symbol per symbol, and a transmission start time. As a result, the MAC lower sublayer #1 of STA 1 can calculate the transmission end time (T₂) of the PPDU 2.

The MAC lower sublayer #1 of STA 1 compares the transmission end time T₁ of the PPDU 1 with the transmission end time T₂ of the PPDU 2, and controls transmission of the PPDU 1 (PPDU length) on a basis of a comparison result.

In a case of T₂-8 microseconds ≤ T₁ ≤ T₂ + 8 microseconds (T₂-4 microseconds ≤ T₁ ≤ T₂ + 4 microseconds in a case where the PPDU 1 includes the trigger frame set as CS Required = 1), the MAC lower sublayer #1 of STA 1 does not control the PPDU length for transmission of the PPDU 1.

In a case of T₁ > T₂ + 8 microseconds (T₁ > T₂ + 4 microseconds in a case where the PPDU 1 includes the trigger frame set as CS Required = 1), that is, in a case where the transmission end time of the PPDU 1 is later than the transmission end time of the PPDU 2 by a predetermined time period or more, the MAC lower sublayer #1 of STA 1 instructs the PHY sublayer #1 to stop transmission of the PPDU 1 such that the transmission end time of the PPDU 1 is T₂ ± 8 microseconds. At this time, a new length of the PPDU 1 is notified in the MPDU such that the immediate response is transmitted from the non-AP MLD after the SIFS after the transmission of the PPDU 1 is stopped. The new length of the PPDU 1 is described in an A-control field or a frame body in the HT-control field. On a non-AP MLD side of the transmission destination, the demodulation and decoding operation of the PPDU 1 with a length changed can be terminated within a specified time on the basis of this description.

In a case of T₁ < T₂-8 microseconds (T₁ < T₂-4 microseconds in a case where the PPDU 1 includes the trigger frame set as CS Required = 1), that is, in a case where the transmission end time of the PPDU 1 is earlier than the transmission end time of the PPDU 2 by a predetermined time period or more, the MAC lower sublayer #1 of STA 1 performs padding on the PPDU 1 such that the transmission end time T₁ of the PPDU 1 is T₂-8 microseconds or more (T₁ is T₂-4 microseconds or more in a case where the PPDU 1 includes the trigger frame set as CS Required = 1). At this time, in a case where the time required for adjustment is 16 microseconds or less (the difference between T₂-8 microseconds and T₁ is within 16 microseconds, that is, the difference between T₂ and T₁ is within 24 microseconds), the transmission end time of the PPDU 1 may be adjusted by extending the Packet Extension field. Furthermore, at this time, the new length of the PPDU 1 is notified in the PPDU 1.

As described above, after the transmission end time of the PPDU 1 can be aligned with the transmission end time of the PPDU 2, communication can be performed without simultaneously receiving the DL PPDU and transmitting the immediate response in the NSTR non-AP MLD.

### D-2. Communication sequence example 2

This term D-2 describes a communication sequence example in which the PPDU to be transmitted first is an HE/EHT PPDU, the PPDU to be transmitted later is a non-HE PPDU, the number of OFDM symbols, the OFDM symbol length and the transmission start time of the HE/EHT PPDU to be transmitted on each link are shared between links, and the number of OFDM symbols and the OFDM symbol length of the non-HE PPDU to be transmitted later are adjusted. In the following description, it is assumed that the OFDM symbol length of the HE/EHT PPDU is transmitted in 16 microseconds.

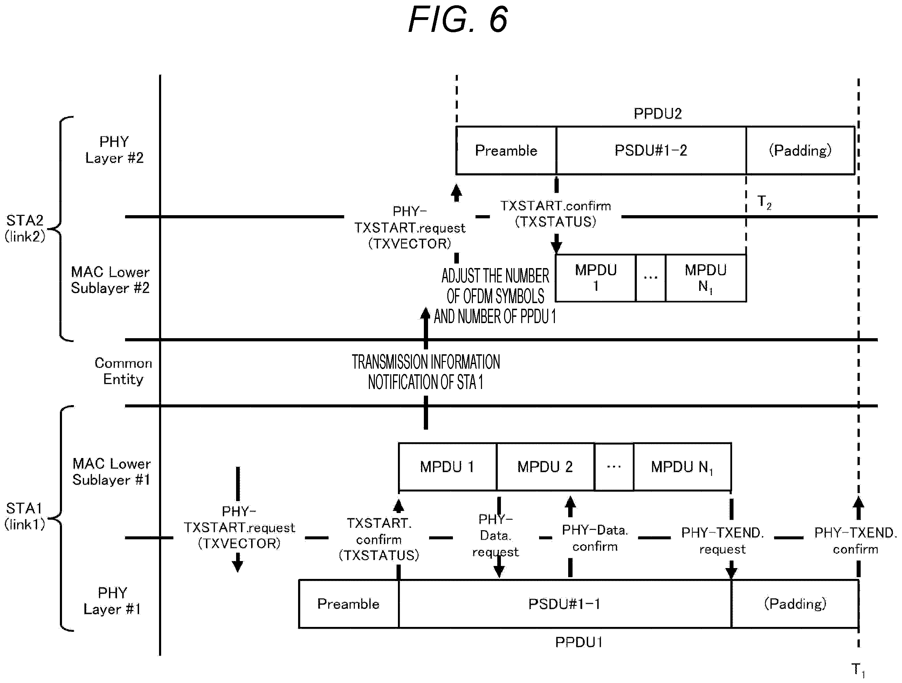

As a specific example, Fig. 6 illustrates a communication sequence example in a case where the STR AP MLD including STA 1 and STA 2 transmits the DL PPDU to the NSTR non-AP MLD. However, the link used by STA 1 is link 1, and the link used by STA 2 is link 2. Furthermore, it is assumed that the PPDU to be transmitted first by STA 1 is an EHT/HE PPDU (PPDU 1), and the PPDU to be transmitted later by STA 2 is a non-HE PPDU (PPDU 2). Note that, it is assumed that each PPDU does not include a frame with high priority.

Before the start of the communication sequence shown in Fig. 6, for example, the AP MLD and the non-AP MLD exchange capability information indicating that a pair of link 1 and link 2 is an STR link pair for AP MLD and the NSTR link pair for non-AP MLD during connection. Moreover, the capability information indicating whether or not it is possible to perform an adjustment control of the PPDU length and decoding of the PPDU with a length adjusted is exchanged. Note that in a case where the pair of link 1 and link 2 is not the NSTR link pair for the non-AP MLD (that is, is the STR link pair), the communication quality does not deteriorate due to the interference between links even when the transmission end time of link 1 and the transmission end time of link 2 do not match, and thus it is not necessary to share information between the links or adjust the transmission start time.

Then, in the communication sequence shown in Fig. 6, first, a primitive of PHY-TXSTART.request (TXVECTOR) is sent from an MAC lower sublayer #1 to a PHY sublayer #1 of STA 1, and a start of transmission of PSDU#1-1 is requested. At this time, TIME_OF_DEPARTURE_REQUESTED = true in PHY-TXSTART.request is set, and information associated with the transmission start time is set to be described in PHY-TXSTART.confirm (TXSTATUS) sent from the PHY sublayer #1.

The PHY sublayer #1 of STA 1 notifies the MAC lower sublayer #1 of information associated with the transmission start time in PHY-TXSTART.confirm (TXSTATUS). Therefore, the MAC lower sublayer #1 of STA 1 can accurately get the time when the PHY sublayer #1 started to transmit a frame.

Next, the MAC lower sublayer #1 of STA 1 notifies a MAC lower sublayer #2 of STA 2 of information associated with the PPDU (PPDU 1) transmitted by STA 1 through the common entity. Therefore, the MAC lower sublayer #2 of STA 2 can calculate the transmission end time (T₁) of the PPDU 1.

When STA 2 obtains the transmission right with link 2, the MAC lower sublayer #2 of STA 2 sends a primitive of PHY-TXSTART.request (TXVECTOR) to PHY sublayer # 2, and requests transmission of the PPDU (PPDU 2).

At this time, the MAC lower sublayer # 2 of STA 2 determines which of the transmission end time of the PPDU 1 and the PPDU 2 is adjusted on the basis of the capability information and the information associated with transmission of the PPDU 1, the information associated with the transmission schedule of the PPDU 2 held by the MAC lower sublayer #2, and the capability information of the terminal (non-AP MLD) of the transmission destination of the PPDU 2 (whether or not it corresponds to reception of the non-HE PPDU on which an adjustment of the PPDU length is performed). At this time, the MAC lower sublayer #2 of STA 2 may calculate the scheduled transmission end time (T₂) when the PPDU is configured using each of the various symbol lengths corresponding thereto.

The MAC lower sublayer #2 of STA 2 may set a GI length of the PPDU 2 according to the length per symbol of the OFDM symbol notified from the MAC lower sublayer #1 of STA 1 as an adjustment of the transmission end time. Specifically, [GI length of PPDU 1, GI length of PPDU 2] = [1.6 microseconds, 0.4 microseconds] and [3.2 microseconds, 0.8 microseconds] are set, and [OFDM symbol length of PPDU 1, OFDM symbol length of PPDU 2] = [14.4 microseconds, 3.6 microseconds] and [16.0 microseconds, 4.0 microseconds] are set such that the OFDM symbol length of the PPDU 1 is an integral multiple of the OFDM symbol length of the PPDU 2. Therefore, by simply adjusting the number of symbols such that the number of OFDM symbols in the PPDU 2 is not 4n-3 times the number of OFDM symbols in the PPDU 1 (where n is an arbitrary natural number), a deviation of the transmission end time due to the deviation of the GI length is reduced, for example, the deviation of the transmission end time between the PPDU 1 and the PPDU 2 can be set to 8 microseconds or less, and the processing for matching the transmission end time can be facilitated.

In this communication sequence example, the OFDM symbol length of the PPDU 2 is set to 1/4 of the OFDM symbol length of the PPDU 1, the OFDM symbol length of the PPDU 2 is set to 4.0 microseconds, and the number of OFDM symbols of the PPDU 2 is controlled to be 4n times the number of OFDM symbols of the PPDU 1 for transmission.

As described above, after the transmission end time of the PPDU 2 can be aligned with the transmission end time of the PPDU 1, communication can be performed without simultaneously receiving the DL PPDU and transmitting the immediate response in the NSTR non-AP MLD.

### E. Effects

In this term E, effects brought about by the present disclosure are summarized.

According to the present disclosure, the number of OFDM symbols of the PPDU can be adjusted so as to share information associated with the length of the PPDU to be transmitted on a link that is within the MLD and to simultaneously terminate transmission of the non-HE PPDU. Therefore, PPDUs can be generated and transmitted so as to satisfy a requirement for end time alignment even when PPDUs having different OFDM symbol lengths are transmitted to the non-STR MLD, and reception failure due to interference between links in the non-STR MLD can be prevented.

Specifically, in a case where the MLO is performed between the AP MLD and the non-AP MLD, the transmission start time and the number of OFDM symbols of the PPDU transmitted first are shared between links such that transmission end time are aligned between links when the AP MLD transmits PPDUs having different OFDM symbol lengths to the non-AP MLD. Therefore, on the basis of the shared information, it is possible to adjust the PPDU length of either the PPDU that has been started to be transmitted first or the PPDU that is scheduled to be transmitted such that the difference between the transmission end times of the individual links is within a predetermined time period. The NSTR non-AP MLD on the reception side can avoid a situation in which reception of the DL PPDU on the other link fails due to simultaneous transmission of the immediate response on one link.

### INDUSTRIAL APPLICABILITY

The present disclosure has been described in detail above with reference to specific embodiments. However, it is obvious that those skilled in the art can make modifications and substitutions of the embodiments without departing from the gist of the present disclosure.

In the present description, an embodiment has been mainly described in which the present disclosure is applied to a communication system in which a link on which a non-HE PPDU based on a format before IEEE 802.11 ax is transmitted and a link on which an HE/EHT PPDU based on a format after IEEE 802.11 ax is transmitted are paired to perform a multi-link operation, but the gist of the present disclosure is not limited thereto. The present disclosure can be applied to various types of communication systems in which links on which data frames of different formats are transmitted are paired to perform a multi-link operation, and similarly, an effect of aligning transmission end time between links by data frame length adjustment can be obtained.

In short, the present disclosure has been described in a form of exemplification, and the contents described in the present description should not be interpreted in a limited manner. In order to determine the gist of the present disclosure, the scope of claims should be taken into consideration.

Note that the present disclosure can also have the following configurations.

(1) A communication device including:
   a first communication unit that performs communication on a first link;
   a second communication unit that performs communication on a second link; and
   a control unit that controls communication operations of the first communication unit and the second communication unit using the first link and the second link, in which
   the control unit controls a transmission frame length in the first link or the second link when the first communication unit starts transmission first on the first link.
(2) The communication device according to (1), in which
   the control unit controls the transmission frame length in the first link or the second link on a basis of information associated with transmission data that has been started to be transmitted by the first communication unit and information associated with transmission data scheduled to be transmitted by the second communication unit.
(3) The communication device according to (2), in which
   the information associated with the transmission data includes at least an OFDM symbol length, a number of OFDM symbols, and a transmission start time (including a scheduled transmission start time).
(4) The communication device according to any one of (1) to (3), in which
   in a case where a difference between a transmission end time in the first link by the first communication unit and a scheduled transmission end time in the second link by the second communication unit is more than or equal to a predetermined value, the control unit controls the transmission frame length such that the difference between the transmission end time and the scheduled transmission end time is less than a predetermined value.
(5) The communication device according to (4), in which
   the predetermined value is determined on a basis of whether or not a frame requesting a return of the frame to a transmission destination includes a frame requesting carrier sensing before transmission of the frame to the transmission destination.
(6) The communication device according to any one of (1) to (5), in which
   the control unit determines whether or not to control the transmission frame length on a basis of whether or not the first communication unit or the second communication unit have capability to change the transmission frame length for transmission end time adjustment and notify that the transmission frame length has been changed.
(7) The communication device according to (1), in which
   the control unit determines whether or not to control the transmission frame length on a basis of capability information of a communication device as a transmission destination of data using the first link and the second link.
(8) The communication device according to (7), in which
   the control unit determines whether or not to control the transmission frame length on a basis of whether or not the communication device of the transmission destination can terminate a demodulation and decoding operation at a predetermined timing with respect to a notification related to a change in the transmission frame length.
(9) The communication device according to (7) or (8), in which
   the control unit determines whether or not to control the transmission frame length in a case where a pair of links is formed in which a restriction occurs when the first link and the second link simultaneously transmit and receive for the communication device of the transmission destination.
(10) The communication device according to any one of (1) to (9), in which
   the control unit determines whether or not to control the transmission frame length on a basis of information associated with transmission data that has been started to be transmitted first on the first link by the first communication unit or information associated with transmission data scheduled to be transmitted on the second link by the second communication unit.
(11) The communication device according to (10), in which
   the control unit determines whether or not to control the transmission frame length on a basis of a type of transmission data that has been started to be transmitted first on the first link by the first communication unit or a type of transmission data scheduled to be transmitted on the second link by the second communication unit.
(12) The communication device according to (11), in which
   the control unit determines not to control the transmission frame length in a case where the transmission data whose transmission is terminated earlier includes data with high priority.
(13) The communication device according to (11), in which
   the control unit determines which frame length of a frame that has been started to be transmitted first and a frame scheduled to be transmitted is to be controlled.
(13-1) The communication device according to (13), in which
   the control unit determines whether or not to control a frame length of the frame that has been started to be transmitted first on a basis of whether or not a terminal of a frame transmission destination supports reception processing when a frame length during reception is changed.
(14) The communication device according to any one of (1) to (13),
   in which in a case where the control unit controls the transmission frame length, the control unit describes information associated with the change in the transmission frame length in the transmission frame.
(15) The communication device according to any one of (1) to (14), in which
   the control unit performs a control to increase the transmission frame length of one link so as to be aligned with a transmission end time on the other link, or control to decrease the transmission frame length of one link so as to be aligned with a transmission end time on the other link.
(16) The communication device according to (15), in which
   the control unit sets an OFDM symbol length of the transmission frame in one link to a length that is an integral multiple of the OFDM symbol length of the transmission frame in the other link, and increases or decreases the transmission frame length of one link so as to be aligned with the transmission end time on the other link.
(17) The communication device according to (15), in which
   the control unit adjusts either number of OFDM symbols or length of padding, and increases or decreases the transmission frame length of one link so as to be aligned with the transmission end time on the other link.
(18) The communication device according to (15), in which
   the control unit stops frame transmission on one link so as to be aligned with the transmission end time on the other link.
(19) The communication device according to any one of (1) to (18), in which
   one of the first communication unit or the second communication unit transmits an HE/EHT PPDU, and the other transmits a non-HE PPDU.
(20) A communication method in which a communication device performs communication using a first link and a second link, the communication method including:
   a step of starting transmission first on the first link; and
   a step of controlling a transmission frame length in the first link or the second link such that a difference between a transmission end time in the first link and a scheduled transmission end time in the second link is less than a predetermined value.

### REFERENCE SIGNS LIST

- 200: Communication device
- 210: Communication unit
- 211: Communication control unit
- 212: Communication storage unit
- 213: Common data processing unit
- 214: Individual data processing unit
- 215: Signal processing unit
- 216: Wireless interface unit
- 217: Amplification unit
- 220: Control unit
- 230: Storage unit
- 240: Antenna

## Claims

1. A communication device comprising:
a first communication unit that performs communication on a first link;
a second communication unit that performs communication on a second link; and
a control unit that controls communication operations of the first communication unit and the second communication unit using the first link and the second link, wherein
the control unit controls a transmission frame length in the first link or the second link when the first communication unit starts transmission first on the first link.

2. The communication device according to claim 1, wherein
the control unit controls a transmission frame length in the first link or the second link on a basis of information associated with transmission data started to be transmitted by the first communication unit and information associated with transmission data scheduled to be transmitted by the second communication unit.

3. The communication device according to claim 2, wherein
the information associated with the transmission data includes at least an OFDM symbol length, a number of OFDM symbols, and a transmission start time (including a scheduled transmission start time).

4. The communication device according to claim 1, wherein
in a case where a difference between transmission end time in the first link by the first communication unit and scheduled transmission end time in the second link by the second communication unit is more than or equal to a predetermined value, the control unit controls the transmission frame length such that the difference between the transmission end time and the scheduled transmission end time is less than a predetermined value.

5. The communication device according to claim 4, wherein
the predetermined value is determined on a basis of whether or not a frame requesting return of a frame to a transmission destination includes a frame requesting carrier sensing before transmission of the frame to the transmission destination.

6. The communication device according to claim 1, wherein
the control unit determines whether or not to control the transmission frame length on a basis of whether or not the first communication unit or the second communication unit have capability to change the transmission frame length for transmission end time adjustment and notify that the transmission frame length has been changed.

7. The communication device according to claim 1, wherein
the control unit determines whether or not to control the transmission frame length on a basis of capability information of a communication device as a transmission destination of data using the first link and the second link.

8. The communication device according to claim 7, wherein
the control unit determines whether or not to control the transmission frame length on a basis of whether or not the communication device of the transmission destination can terminate a demodulation and decoding operation at a predetermined timing with respect to the notification related to the change in the transmission frame length.

9. The communication device according to claim 7, wherein
the control unit determines whether or not to control the transmission frame length in a case where a pair of links is formed in which a restriction occurs when the first link and the second link simultaneously transmit and receive for the communication device of the transmission destination.

10. The communication device according to claim 1, wherein
the control unit determines whether or not to control the transmission frame length on a basis of information associated with transmission data that has been started to be transmitted first on the first link by the first communication unit or information associated with transmission data scheduled to be transmitted on the second link by the second communication unit.

11. The communication device according to claim 10, wherein
the control unit determines whether or not to control the transmission frame length on a basis of a type of transmission data that has been started to be transmitted first on the first link by the first communication unit or a type of transmission data scheduled to be transmitted on the second link by the second communication unit.

12. The communication device according to claim 11, wherein
the control unit determines not to control the transmission frame length in a case where the transmission data whose transmission is terminated earlier includes data with high priority.

13. The communication device according to claim 11, wherein
the control unit determines which frame length of a frame that has been started to be transmitted first and a frame scheduled to be transmitted is to be controlled.

14. The communication device according to claim 1, wherein
in a case where the control unit controls the transmission frame length, the control unit describes information associated with a change in the transmission frame length in the transmission frame.

15. The communication device according to claim 1, wherein
the control unit performs a control to increase a transmission frame length of one link so as to be aligned with a transmission end time on the other link, or control to decrease a transmission frame length of one link so as to be aligned with a transmission end time on the other link.

16. The communication device according to claim 15, wherein
the control unit sets an OFDM symbol length of the transmission frame in one link to a length that is an integral multiple of the OFDM symbol length of the transmission frame in the other link, and increases or decreases the transmission frame length of one link so as to be aligned with a transmission end time on the other link.

17. The communication device according to claim 15, wherein
the control unit adjusts either number of OFDM symbols or a length of padding, and increases or decreases the transmission frame length of one link so as to be aligned with the transmission end time on the other link.

18. The communication device according to claim 15, wherein
the control unit stops frame transmission on one link so as to be aligned with the transmission end time on the other link.

19. The communication device according to claim 1, wherein
one of the first communication unit or the second communication unit transmits an HE/EHT PPDU, and the other transmits a non-HE PPDU.

20. A communication method in which a communication device performs communication using a first link and a second link, the communication method comprising:
a step of starting transmission first on the first link; and
a step of controlling a transmission frame length in the first link or the second link such that a difference between a transmission end time in the first link and a scheduled transmission end time in the second link is less than a predetermined value.
